# EUROPEAN PATENT APPLICATION

(11) **EP 1 700 835 A2**
(43) Date of publication of application: **13.09.2006**
(21) Application number: 06380024.7
(22) Date of filing: 30.01.2006
(51) Int. Cl.: C05C 5/02, C05G 3/00, C05G 5/00, C05D 3/02, C05F 11/02

(54) **Composition for the nutrition and irrigation of plants**

(30) Priority: 31.01.2005 ES 200500173; 04.01.2006 ES 200600016
(71) Applicant: Laboratorios Diet-Esthetic, S.A., 08907 L'Hospitalet de Llobregat (ES)
(72) Inventor: Mata Brenuy, Manuel, 08907 L'Hospitalet de Llobregat (ES)
(74) Representative: Marques Alos, Fernando

(57) **Abstract**

COMPOSITION FOR THE NUTRITION AND THE IRRIGATION OF PLANTS,
characterized essentially by being formed by a mass of 94% to 96.2% of its weight in water, from 3.5% to 4% of the weight is cellulose and from 0.4 to 3·5% of the weight is potassium nitrate packaged in a plastic container endowed with a superior lid.

## Description

### Object of the invention

The object of the present invention such as it is expressed in the announcement of this descriptive memory refers to a composition for the nutrition and the irrigation of plants on the basis of water and nutrients served in a gelatinous form, constitutive in a variety of specific products for the care of the plants.

One of the most important problems that the tendency to have plants in homes offices and in indoor spaces comes from the constant need to water them. This implies in many cases the grave deterioration of them when the caring for them has to interrupt this care for short periods, for example during absences because of holidays.

This range of obtained products aims to the care of plants by means of the incorporation in a base product composed by water and cellulose of potassium nitrate, foliar and roots fertilizers, salinity correctors, bio-stimulants and humic and fluvic acids which will be administered in the form of a gel, regulating this way the liberation of same in a sustained form during a long period of time.

### Antecedents of the invention

One of the most important problems that represents to have plants in houses offices and in general closed places is the needed of permanent irrigation. This implies in many cases an important deterioration when the person in charge of them needs to interrupt these for a short periods, for instance during an absence for holydays.

As an alternative to this problem solutions have been designed based on automatic irrigation systems where the irrigation of the plants is by means of a complex timing device. This is not the appropriate solution for the typical plants which adorn the home since this is usually a costly system which need a complex installation which installation making it impractical.

The second alternative much more popular is the use of flower pots and plant boxes fitted with auxiliary water deposits or tanks This solution is simple to use, it is enough to substitute all the baskets for flower-pots with said deposits or tanks incorporated, although said elements usually are relatively expensive, and in general their design is usually limited to the manufactured materials, in all cases plastic, therefore there are no alternatives manufactured in clay or decorated porcelain.

In any case, none of these systems contemplate the possibility of sustained administration of nutrients to fortify the plants.

On the other hand, it has been demonstrated that these devices are not appropriate for all types of plants, since in many cases the accumulation of water can be as detrimental to the plants as lack of water. In the same sense, it needs to be said that these devices supply water by capillarity, and thus are much affected by the surrounding temperature which may have a tendency to evaporate it very quickly leaving the plant without water during the holiday period of the person responsible for the care of them.

These same problems can be transferred to other situations such as the watering of urban plants in places with little annual rainfall.

Said inconveniences have motivated the search of a solution to the problem of irrigation not based on the traditional concepts but in the application of a product capable of supplying water to the plant during long periods of time at a modest cost.

### Detailed description of the invention

To solve these inconveniences the present invention has been developed which consists in a composition of water, cellulose and a variety of nutrients and specific products for the care of the plants in a gelatinous form with a slow liberation, which gradually converts into liquid on coming into contact with the microbiological activity of the soil, which supposes a new concept in the irrigation of plants: a 100% natural product which permits the plants to keep in a perfect state for 30 days or more(depending on the dose supplied) without the necessity of watering or fertilizing them. The water, the nutrients and the selfsame cellulose which are gradually and constantly liberated, are 100% assimilated by the roots of the plant, the water dissolving the own nutrients belonging to the soil in the flower pot, and the cellulose together with the potassium nitrate and the other specific products in the gel, are acting as complimentary nutrients and fortifiers.

For this reason, it is an suitable for flower boxes, traffic islands, motorway embankment areas and other areas which, in the majority of cases, must be manually watered due to the impossibility of automatic irrigation systems; and also it is the definitive solution for holydays or long periods of absence in the case of domestic plants, not only exterior but indoor as well.

Specifically, this innovative composition for the nutrition and irrigation of plants is made up of three elements, first of all, from 94% to 96·2% of the weight is water, secondly, from 3·5% to 4% of the weight is cellulose; finally, in third and last place, potassium nitrate and/or a mixed or range of different products, in a 0.4 to 3·5% in weight This range of products, that can bring up to the partial or total substitution of the potassium nitrate and it is organized into four groups according to their function:
- Folic and roots fertilizer group, made up of different mixtures of Nitrogen, phosphoric oxide, potassium oxide, Magnesium oxide, boron, zinc, Magnesium, molybdenum, iron, more micronutrients added in a proportion in all cases not superior to 0·5%.These ingredients may have been complex by EDTA, DTPA, EDDHA, boric and heptagluconic acid. They may be supplied by different types of clays rich in all or part of the minerals described. These folic fertilizers have as a function the contribution of the natural plant minerals; they are applicable for foliar or fertilizer irrigation
- Corrector of salinity group, made up of calcium oxide complex by lignosulfonics and heptagluconate acid in a percentage in weight of between 0·4% and 3·5% of the total. This salinity corrector has the function of supplementing the lack of calcium.
- Bio stimulant group made up of phosphates of potassium equivalent to 60% of the phosphoric acid, or a mixture of protein nitrogen plus free amino acids plus oligopeptides plus polypeptides proceeding from controlled hydrolysis without chloride. These elements are incorporated in the composition in a proportion of between 0-4% to 3.5% in weight and have the function of stimulating the natural defences of the plants against fungi. Systematic by foliar means, establishing itself and absorbed even by the skin or bark. 0·4% to 3·5% in weight.
   In this way a final composition has been obtained, made up of water in 94% to 96:2% of the weight, cellulose in 3·5% to 4% of the weight, and a complementary composition in proportion of between 0·4% and 3·5% in weight of the composition, which at the same time is constituted of 0% to 95% of potassium nitrate and 5% to 100% of any of the elements described in the aforementioned four anterior groups or a combination of two or more of these.
- Humic and fulvic acid group (HUMUS), constituted by complex organic molecules which are formed by the break down of the organic material by means of the action of the micro organisms in the soil and the earth worms. Preferably, the source of this humus will be the layer of deposits in Montana and Dakota (USA) being previously treated to sulfurized to modify their physical chemical properties to use for foliar or fertilizer irrigation. The incorporation of these humic and fulvic acids in the general composition in a percentage of between 0·4% to 3·5% in weight.

In this way a final composition has been obtained, made up of water in 94% to 96:2% of the weight, cellulose in 3·5% to 4% of the weight, and a complementary composition in proportion of between 0·4% and 3·5% in weight of the composition, which at the same time is constituted of 0% to 95% of potassium nitrate and 5% to 100% of any of the elements described in the aforementioned four anterior groups or a combination of two or more of these.

In this composition, the molecules of water and potassium nitrate and/or the range of products stated before, stay mechanically linked with the cellulose molecule and at ambient temperature presents a gellotois consistency.

Said product being packaged, preferably, for its use in portions of 250m in plastic container endowed with a superior lid.

### Directions for use are the following:

In the first place, the plant is irrigated with abundant water, next the container is opened and the product is separated from the sides of the container with the fingers, the lid is then removed with scissors, next a small hollow is made in the soil of the flower pot, using the fingers or a suitable tool. The container is then placed, upside down onto the hollow (without removing the container) so that the product comes into contact with the soil. Since his moment, the microbiological activity normal to the micro-organisms present in the soil, begin to attack the innovative gel destroying the chemical links which hold the water, and the potassium nitrate and the mixture or range of the other products described as complementary or re-enforcement nutrients, to the cellulose, then the gel will convert slowly in a liquid; this way all the components will be liberating to the soil in a constant and gradual manner,
Having established the expressed concept, there follows the claims, synthesizing the news that are claimed:

## Claims

1. "Composition for the nutrition and irrigation of plants **characterized** essentially by being formed by a mass of 94% to 96·2% of its weight in water, from 3·5% to 4% of the weight is cellulose and from 0·4 to 3·5% of the weight is potassium nitrate packaged in a plastic container endowed with a lid.

2. "Composition for the nutrition and irrigation of plants'' according to the anterior claim **characterized by** the percentage of water which will be preferably 96·15% of its weight.

3. "Composition for the nutrition and irrigation of plants'' according to the claim1, **characterized by** the percentage of cellulose which will be preferably 3·5% of its weight.

4. "Composition for the nutrition and irrigation of plants'' according to the claim 1, **characterized by** the percentage of potassium nitrate which will be preferably 1% of its weight.

5. "Composition for the nutrition and irrigation of plants'' according to first claim, **characterized by** the potassium nitrate is substituted total or partially by foliar or roots fertilizers or correctors of salinity or bio stimulants or humic and fulvic acid.

6. "Composition for the nutrition and irrigation of plants" according to the claims 1 and 5, **characterized** because the foliar and roots fertilizers are made up of mixtures of Nitrogen, phosphous oxide ,potassium oxide, Magnesium oxide, Boron, Zinc, Magnesium, Molibdeno, Iron, plus chelated micronutrients in a proportion in all cases of not more than 0·5% of the weight of the composition

7. "Composition for the nutrition and irrigation of plants" according to claims 1 and 5 **characterized** because the foliar and roots fertilizers may have been chelated by EDTA, DTPA, EDDHA, boron and heptagulconic acid.

8. "Composition for the nutrition and irrigation of plants'' according to the claims 1 and 5, **characterized** because the foliar and roots fertilizers may have been chelated by EDTA, DTPA, EDDHA, boron and heptagulconic acid.

9. "Composition for the nutrition and the irrigation of plants" according to claims 1 and 5, **characterized** because the corrector of salinity is preferably Calcium oxide complexed by lignosulfonics and heptagulconic acid in a percentage in weight of between 0·4% and 3·5% in total,

10. "Composition for the nutrition and irrigation of plants" according to the claims 1 and 5, **characterized** because the bio stimulants, are constituted of potassium phosphates equivalent to 50% of the phosphoric acid, or a mixture protein nitrogen plus free amino acids oligopeptides plus polypeptides proceeding from controlled hydrolysis without chloride, incorporating these elements into the composition in a proportion of between 0·4% and 3·5% in weight.

11. Composition for the nutrition and irrigation of plants'' according to the claims 1 and 5, **characterized** because the humic and fulvic acids are preferably made up of layer deposits from Montana and Dakota (USA) being previously sulfurized to modify their physical chemical properties to use for the fulvic or fertilizer irrigation, the incorporation of these acids in the general composition in a proportion of between 0·4% and 3·5% in weight.
